# EUROPEAN PATENT APPLICATION

(11) **EP 2 372 884 A1**
(43) Date of publication of application: **05.10.2011**
(21) Application number: 10461511.7
(22) Date of filing: 29.03.2010
(51) Int. Cl.: H02K 15/16

(54) **Guiding device for assembling or disassembling a rotor of an electric generator and method**

(71) Applicant: Alstom Technology Ltd, 5400 Baden (CH)
(72) Inventor: Fogel, Robert, 51-113, Wroclaw (PL); Hediger, Daniel, 5504 Othmarsingen (CH); Tyszkiewicz, Kazimierz, 53-621, Wroclaw (PL)

(57) **Abstract**

The guiding device (1) for assembling or disassembling a rotor (2) of an electric generator (3) comprises a first element (5) connectable to the rotor (5) and a second element (7) connectable to a fixed frame (8). The first and second element (5, 7) are slidingly connected along only one direction. The invention also refers to a method for guiding the rotor during assembling or disassembling.

## Description

### TECHNICAL FIELD

The present invention relates to a guiding device for assembling or disassembling a rotor of an electric generator and a method for guiding the rotor during assembling or disassembling.

### BACKGROUND OF THE INVENTION

During inspection of electric generators, the rotor must sometimes be removed from the stator to be then reassembled thereon.

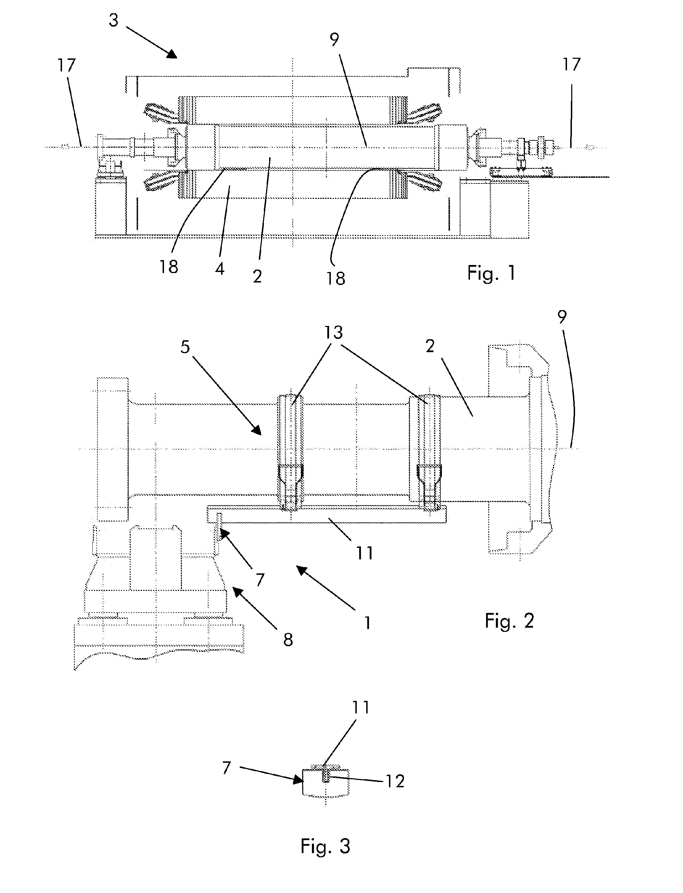

With reference to figure 1, in order to insert into or remove the rotor 2 from the stator 4, cushions 18 filled with compressed air, which may slide on a guideway, are inserted between the stator 4 and the rotor 2.

Then axial cables 17 are connected to the rotors ends such that the rotor 2 is pulled in or out horizontally and axially.

Nevertheless, in some cases, during axial movement, the rotor 2 may rotate; if this occurs the rotor 2 may fall from the cushions 18, damaging the stator and/or itself.

### SUMMARY OF THE INVENTION

The technical aim of the present invention is therefore to provide a guiding device and a method by which the said problems of the known art are eliminated.

Within the scope of this technical aim, an aspect of the invention is to provide a guiding device and a method that permit rotor assembling or disassembling with no risk of its falling from the cushions that support it during its axial movement.

Another aspect of the present invention is to provide a guiding device and a method, which prevent rotation of the rotor during insertion into or extraction from the stator.

The technical aim, together with these and further aspects, are attained according to the invention by providing a guiding device and a method in accordance with the accompanying claims.

### BRIEF DESCRIPTION OF THE DRAWINGS

Further characteristics and advantages of the invention will be more apparent from the description of a preferred but non-exclusive embodiment of the guiding device and method, illustrated by way of non-limiting example in the accompanying drawings, in which:
Figure 1 is a schematic view of a rotor during assembling or disassembling with help of a removable trolley (no guiding device is shown in this figure);
Figures 2 and 3 show a guiding device in a first embodiment of the invention; and
Figures 4 and 5 show a guiding device in a second embodiment of the invention.

### DETAILED DESCRIPTION OF EMBODIMENTS OF THE INVENTION

With reference to the figures, these show a guiding device 1 for assembling or disassembling a rotor 2 of an electric generator 3 from an annular stator 4.

The device 1 comprises a first element 5 connectable to the rotor 2 and a second element 7 connectable to a fixed frame 8; these first and second element 5, 7 are slidingly connected each other along only one direction.

In particular, when the first element 5 is connected to the rotor 2 and the second element 7 is connected to the fixed frame 8, the first and the second element 5, 7 are slidingly connected along a direction parallel to the rotor longitudinal axis 9.

The first or second element 5, 7 has a straight guide 11 slidable in a seat 12 respectively of the second or first element 7, 5.

In the following specific reference to two particular embodiments is made.

The embodiment shown in figures 2 and 3 has the first element 5 that has the straight guide 11 parallel to the rotor longitudinal axis 9; the straight guide 11 is preferably made of a T shaped bar.

In addition, the first element 5 has supports 13 connected to the straight guide 11 and connectable to the rotor 2; these supports 13 comprise two tightening belts.

In figure 2 the belts are shown connected to the straight guide 11 and wrapped around the rotor 2.

The second element 7 comprises a plate connectable to the bearing pedestal lower half (i.e. the lower half of the bearings when their case is open) that defines the fixed frame 8.

The plate defining the second element 7 is provided with the seat 12 that is shaped as a recessed seat arranged to receive a portion of the straight guide 11.

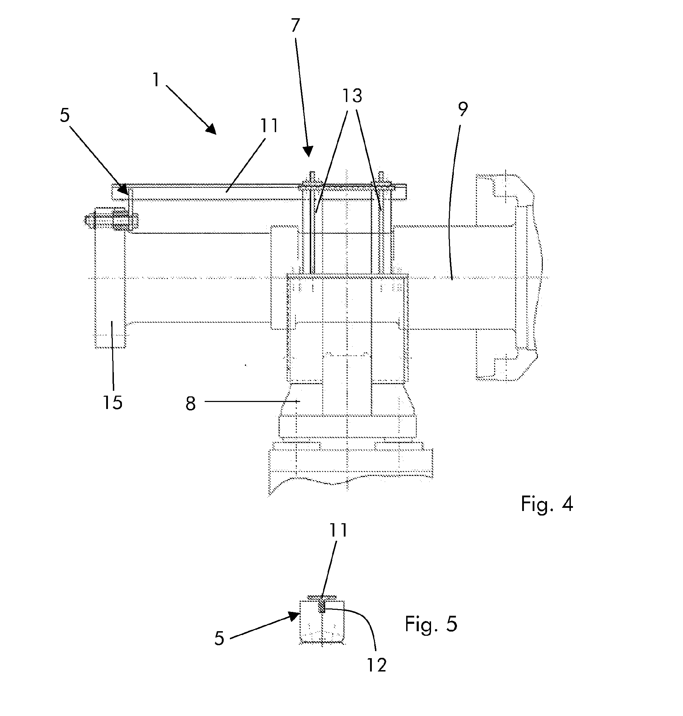

In the embodiment of figures 4 and 5 the first element 5 comprises a plate that is connectable to a coupling flange 15 of the rotor 2 (in figure 4 the plate defining the first element 5 is shown actually connected to the coupling flange 15). This plate is provided with the recessed seat 12.

In contrast, the second element 7 comprises supports 13 carrying the straight guide 11 having a T cross section. Also in this embodiment the straight guide 11 is parallel to the axis 9.

The supports 13 are connectable to the bearing pedestal lower half that defines the fixed frame 8 (in figure 4 the supports 13 are actually shown connected to the bearing pedestal lower half).

The operation of the device in the embodiments of the invention is apparent from that described and illustrated and is substantially the following.

With particular reference to the embodiment of figures 2-3, the rotor 2 is prepared for disassembling and, in this respect, the bearings are opened, the cables 17 are connected to both rotor ends, the cushions 18 are inserted between the stator 4 and rotor 2 and are blown by compressed air.

Thus the first element 5 is connected to the rotor 2 and, in particular, the belts constituting the supports 13 are wrapped around the rotor 2 and the straight guide 11 is arranged parallel to the rotor axis 9.

The second element 7 constituted by the plate with the recessed seat 12 is connected to the fixed frame 8 constituted by the bearing pedestal lower half (at the rotor driven end).

Operations are carried out such that at the end of mounting the straight guide 11 is inserted into the seat 12.

During extraction the rotor 2 is drawn through the cables 17 and rotation is prevented since the straight guide 11 of the first element 5 can only slide with respect to the second element 7 along a direction parallel to the rotor longitudinal axis 9

Operation of the device 1 in the embodiment of figures 4 and 5 is similar to the one already described and, thus, not described in detail. In particular, in this case the first element 5 can only slide with respect to the straight guide 11 along a direction parallel to the rotor longitudinal axis 9.

The method for guiding the rotor 2 of an electric generator 3 during assembling or disassembling comprises:
- connecting a first element 5 to the rotor 2;
- connecting a second element 7 to a fixed frame 8;
- slidingly connecting the first and second element 5, 7 along only one direction;
- making the first and second element slide parallel to the rotor longitudinal axis 9.

Naturally the features described may be independently provided from one another.

In practice the materials used and the dimensions can be chosen at will according to requirements and to the state of the art.

### REFERENCE NUMBERS

- 1: guiding device
- 2: rotor
- 3: electric generator
- 4: stator
- 5: first element (movable guide)
- 7: second element (not movable guide)
- 8: fixed frame
- 9: rotor's longitudinal axis
- 11: straight guide
- 12: seat
- 13: support for straight guide
- 15: coupling flange
- 17: cables
- 18: cushions

## Claims

1. Guiding device (1) for assembling or disassembling a rotor (2) of an electric generator (3) comprising a first element (5) connectable to the rotor (5) and a second element (7) connectable to a fixed frame (8), wherein said first and second element (5, 7) are slidingly connected along only one direction.

2. Guiding device (1) as claimed in claim 1, **characterised in that**, when the first element (5) is connected to the rotor (2) and the second element (7) is connected to the fixed frame (8), the first and the second element (5, 7) are slidingly connected along a direction parallel to the rotor longitudinal axis (9).

3. Guiding device (1) as claimed in claim 2, **characterised in that** said first or second element (5, 7) has a straight guide (11) slidable in a seat (12) respectively of the second or first element (7, 5).

4. Guiding device (1) as claimed in claim 3, **characterised in that** said first element (5) further comprises at least a support (13) connected to the straight guide (11) and connectable to the rotor (2).

5. Guiding device (1) as claimed in claim 4, **characterised in that** said at least a support (13) comprises tightening belts.

6. Guiding device (1) as claimed in claim 4, **characterised in that** said second element (7) comprises a plate having said seat (12).

7. Guiding device (1) as claimed in claim 6, **characterised in that** said fixed frame (8) is constituted by the bearing pedestal lower half and the plate defining the second element (7) is connectable thereto.

8. Guiding device (1) as claimed in claim 3, **characterised in that** said second element (7) comprises at least a support (13) carrying the straight guide (11).

9. Guiding device (1) as claimed in claim 8, **characterised in that** said at least a support (13) is connectable to the bearing pedestal lower half that defines the fixed frame (8).

10. Guiding device (1) as claimed in claim 8, **characterised in that** said first element (5) comprises a plate having said seat (12).

11. Guiding device (1) as claimed in claim 10, **characterised in that** said plate defining the first element (5) is connectable to the coupling flange (15) of the rotor (2).

12. Method for guiding a rotor (2) of an electric generator (3) during assembling or disassembling comprising:
- connecting a first element (5) to the rotor (2);
- connecting a second element (7) to a fixed frame (8);
- slidingly connecting the first and second element (5, 7) along only one direction;
- making the first and second element slide along only one direction parallel to the rotor longitudinal axis 9.
